# EUROPÄISCHE PATENTSCHRIFT

(11) **EP 1 553 273 B1**
(45) Veröffentlichungstag und Bekanntmachung des Hinweises auf die Patenterteilung: **17.05.2017**
(21) Anmeldenummer: 04028830.0
(22) Anmeldetag: 06.12.2004
(51) Int. Cl.: F02M 26/24

(54) **Kühlsystem**
Cooling system
Système de refroidissement

(30) Priorität: 08.01.2004 DE 102004001462
(43) Veröffentlichungstag der Anmeldung: 13.07.2005
(73) Patentinhaber: MAHLE Behr GmbH & Co. KG, 70469 Stuttgart (DE)
(72) Erfinder: Emrich, Karsten, Dipl.-Ing., 70599 Stuttgart (DE); Kull, Reinhard, 71642 Ludwigsburg (DE); Schairer, Andre, Dipl.-Ing. (FH), 70184 Stuttgart (DE)
(74) Vertreter: Grauel, Andreas

(56) Entgegenhaltungen:
- EP-A1- 0 289 406
- EP-A2- 1 099 847
- EP-A2- 1 329 610
- EP-A2- 1 342 893
- WO-A1-03/069149
- WO-A1-03/102396
- DE-A1- 3 320 754
- GB-A- 2 375 388
- SU-A1- 1 571 282
- US-A- 3 203 499
- US-A- 5 209 285

## Beschreibung

Die Erfindung betrifft ein Kühlsystem für einen Verbrennungsmotor, insbesondere für ein Kraftfahrzeug, mit mehreren Kreisläufen mit Wärmeübertragern für mehrere Fluide.

Derartige Kühlsysteme dienen beispielsweise in Kraftfahrzeugen zur Kühlung eines Kühlfluids eines Verbrennungsmotors und zur Kühlung von Verbrennungsluft, die insbesondere mit einem Turbolader komprimiert wird. Solchermaßen aufgeladene Ladeluft wird wie das Kühlfluid des Verbrennungsmotors häufig mittels Kühlluft abgekühlt, wobei als Kühlluft der Fahrtwind des Fahrzeugs oder von einem Lüfter geförderte Umgebungsluft eingesetzt wird. Zwei Sammelkästen eines bekannten Wärmetauschers sind beispielsweise über Ladeluft- oder Kühlmittelrohre miteinander verbunden, wobei -zur Oberflächenvergrößerung- zwischen den Rohren Kühlrippen angeordnet sind. Diese Kühlrippen werden von der Kühlluft durchströmt.

Die US 3 203 499 A offenbart ein Kühlsystem mit einem Lüfter zwischen zwei Wärmetauschern.

Üblicherweise wird ein Kühlfluid durch mehrere in Strömungsrichtung des Kühlfluids hintereinander angeordnete Wärmetauscher geleitet, so daß mehrere Fluide mittels des Kühlfluids abkühlbar sind. Dadurch ist nur eine Strömungsführung und gegebenenfalls nur eine Fördereinrichtung für das Kühlfluid, wie beispielsweise ein Kühllüfter, für mehrere Wärmetauscher notwendig. Die Wärmetauscher sind dabei oft als Kreuzstromwärmetauscher ausgebildet. Ein Nachteil an einer solchen Anordnung ist eine Erwärmung der Kühlluft in einem ersten Wärmetauscher, so daß in allen weiteren Wärmetauschem ein Temperaturunterschied zwischen wärmeaustauschenden Fluiden und damit die Leistungsfähigkeit der Wärmetauscher reduziert ist. Außerdem muß das Kühlfluid immer gegen den Strömungswiderstand aller Wärmetauscher gefördert werden, auch in Betriebszuständen des Kühlsystems, in denen nicht alle Wärmetauscher notwendigerweise mit Kühlluft versorgt werden müssen.

Eine Aufgabe der Erfindung ist insbesondere, ein Kühlsystem der eingangs genannten Art bereitzustellen, bei dem eine unabhängige Versorgung mehrerer Wärmeübertrager mit einem Fluid ermöglicht wird.

Ein Grundgedanke der Erfindung ist es, einem ersten Wärmetauscher eines ersten Kreislaufs eine erste Fluidfördereinrichtung und einem zweiten Wärmetauscher eines zweiten Kreislaufs eine zweite Fluidfördereinrichtung zuzuordnen.

Insbesondere ist bei einem erfindungsgemäßen Kühlsystem ein Wärmetausch zwischen einem ersten und einem zweiten Fluid mittels des ersten Wärmetauschers unabhängig von einem Wärmetausch zwischen einem dritten und einem vierten Fluid mittels des zweiten Wärmetauschers beeinflußbar, indem die erste Fluidfördereinrichtung unabhängig von der zweiten Fluidfördereinrichtung betrieben wird. Beispielsweise ist es möglich, daß in bestimmten Betriebszuständen des Kühlsystems jeweils nur eine Fluidfördereinrichtung betrieben wird. Dadurch ist überflüssiger Energieverbrauch für die Fluidförderung reduzierbar oder vermeidbar.

Gemäß der Erfindung ist ein Trennelement für eine Trennung des zweiten von dem vierten Fluid vorgesehen. Damit wird eine Vermischung des zweiten mit dem vierten Fluid vermieden. Das Trennelement ist dabei insbesondere als Trennwand, als Fluidführungselement oder Leitblech oder als Strömungskanal für das zweite und/oder das vierte Fluid ausgebildet.

Gemäß der Erfindung ist der erste und/oder der zweite Wärmetauscher als Kreuzstromwärmetauscher ausgebildet. Damit ist unter Umständen eine leichte Zugänglichkeit für die beteiligten Fluide zu dem betreffenden Wärmetauscher möglich.

Gemäß einer Ausführungsform der Erfindung ist der erste und/oder der zweite Wärmetauscher als Gegen- oder Gleichstromwärmetauscher ausgebildet. Dadurch wird unter Umständen eine von der jeweiligen Fluidfördereinrichtung aufzubringende Förderleistung verringert, so daß die Fluidfördereinrichtung kleiner und/oder kostengünstiger fertigbar ist.

Gemäß einer Ausführungsform der Erfindung ist die erste und/oder die zweite Fluidfördereinrichtung als Lüfter ausgebildet. Damit ist unter Umständen Kühlluft durch den/die Wärmetauscher förderbar.

Gemäß einer Ausführungsform der Erfindung weist die erste und/oder die zweite Fluidfördereinrichtung ein Fluidfördereinrichtungsgehäuse auf. Damit ist unter Umständen eine Führung des jeweiligen Fluids möglich. Das Fluidfördereinrichtungsgehäuse ist dabei vorteilhafterweise als Strömungskanal oder als Spiralgehäuse ausgebildet. Bei einer einteiligen, vorzugsweise einstückigen Ausbildung des Fluidfördereinrichtungsgehäuses mit einem Gehäuse des ersten beziehungsweise zweiten Wärmetauschers ist unter Umständen ein Fertigungsaufwand des erfindungsgemäßen Kühlsystems reduzierbar.

Gemäß einer Ausführungsform der Erfindung ist das erste und/oder das dritte Fluid flüssig. Flüssigkeiten haben oft einen hohen Wärmekoeffizienten und eignen sich für einen Wärmetransport.

Gemäß der Erfindung ist das erste Fluid ein Kühlfluid zur Kühlung des Verbrennungsmotors. Unter Umständen ist mit Hilfe des Kühlfluids gegebenenfalls überschüssige Wärme von dem Verbrennungsmotor zu dem ersten Wärmetauscher transportierbar und an das zweite Fluid abgebbar.

Gemäß der Erfindung ist das dritte Fluid Verbrennungsluft für den Verbrennungsmotor. Insbesondere wird die Verbrennungsluft vor dem Durchströmen des zweiten Wärmetauschers mittels einer Luftfördereinrichtung aufgeladen. Durch eine Temperierung und/oder Aufladung der Verbrennungsluft ist unter Umständen ein Wirkungsgrad des Verbrennungsmotor steigerbar.

Gemäß der Erfindung ist das zweite und/oder das vierte Fluid gasförmig. Insbesondere ist das zweite und/oder das vierte Fluid Kühlluft. Kühlluft steht unter Umständen in großen Mengen zur Verfügung und eignet sich zum Abtransport von überschüssiger Wärme.

Die Zeichnungen veranschaulichen die Erfindung anhand von Ausführungsbeispielen, und zwar zeigt:
- Figur 1: einen Längsschnitt durch einen Wärmetauscher, dessen Formgebung einer Knochenform angenähert ist,
- Figur 2: eine Draufsicht auf die Scheibenkontur eines Wärmetauscherelements eines Wärmetauschers, teilweise im Schnitt,
- Figur 3: eine weitere Ausführungsform eines Wärmetauschers, teilweise aufgeschnitten,
- Figur 4: eine vergrößerte Detailansicht des Wärmetauschers der Figur 3,
- Figur 5: ein Schnitt entlang der Linie V-V in Figur 2,
- Figur 6: ein Schnitt entlang der Linie VI-VI in Figur 2,
- Figur 7: ein weiteres Ausführungsbeispiel eines Wärmetauschers integriert in das Lüftergehäuse eines Lüfters.

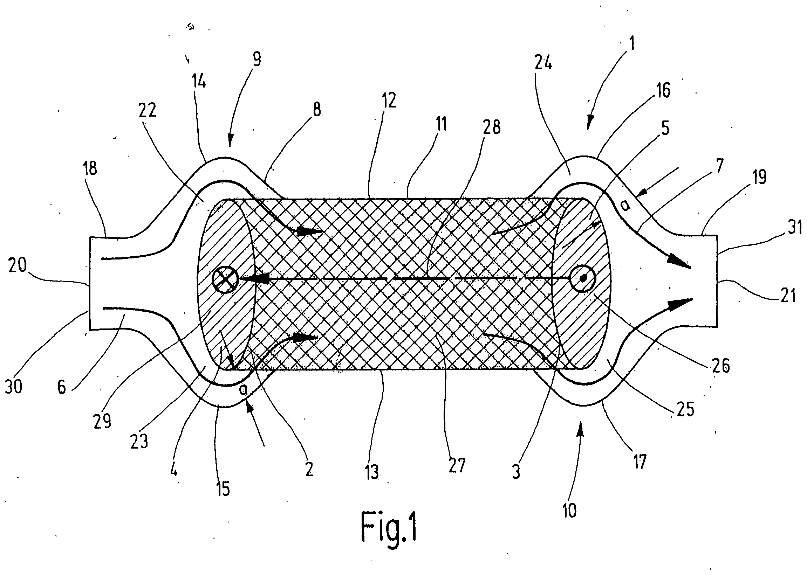

Die Figur 1 zeigt einen Wärmetauscher 1, der als Ladeluftkühler eines Nutzfahrzeugs dient. Der Wärmetauscher 1 weist einen ersten Sammelkasten 2 und einen mit Abstand dazu liegenden zweiten Sammelkasten 3 für ein drittes Fluid 4 auf. Beim dritten Fluid 4 handelt es sich um Ladeluft 5. Die Ladeluft 5 soll mittels eines vierten Fluids 6 gekühlt werden. Beim vierten Fluid 6 handelt es sich um Kühlluft 7, die vom Fahrtwind gebildet und/oder von einem nicht dargestellten Gebläse geföderte Luft ist. Die beiden Sammelkästen 2 und 3 sind rohrförmig, mit ovalem Querschnitt ausgebildet; ihre Längserstreckung verläuft senkrecht zur Zeichenebene der Figur 1.

Der Wärmetauscher 1 besitzt ein Wärmetauschergehäuse 8, das - im Längsschnitt der Figur 1 gesehen - eine Knochenform aufweist. Zwischen zwei verdickten Bereichen 9 und 10 des Gehäuses 8 liegt ein weniger dicker Bereich 11, in dem das Gehäuse 8 zwei ebene Wandungen 12, 13 aufweist. In den verdickten Bereichen 9 und 10 geht die jeweilige ebene Wandung 12 und 13 in konvex gebogene Wandungen 14, 15 beziehungsweise 16, 17 über. Das Gehäuse 8 läuft an seinen Enden in Bereiche 18, 19 aus, die - im Längsschnitt der Figur 1 betrachtet - dünner als der Bereich 11 ist und jeweils eine Stirnseite 20 beziehungsweise 21 besitzen. Die konvex gebogenen Wandungen 14, 15, 16 und 17 verlaufen mit Abstand a zu dem jeweiligen Sammelkasten 2 beziehungsweise 3, so dass Strömungswege 22 bis 25 im Bereich der Sammelkästen 1 und 2 derart ausgebildet sind, dass letztere innerhalb des Gehäuses 8 außen umströmt werden können. Die verdickten Bereiche 9 und 10, die zur Bildung der Knochenform führen, machen dies möglich.

Dem zweiten Sammelkasten 3 wird - senkrecht zur Zeichenebene der Figur 1 - die Ladeluft 5 mittels eines dritten, nicht näher dargestellten ersten Fluidanschlusses 26 zugeführt. Die Ladeluft 5 steigt somit im zweiten Sammelkasten 3 auf und wird dann um 90° in Richtung auf den ersten Sammelkasten 2 umgelenkt. Sie passiert ein zwischen den beiden Sammelkästen 3, 2 liegendes Wärmetauscherelement 27. Dies ist mittels des gebrochen dargestellten Pfeils 28 angedeutet. Nach Passieren des Wärmetauscherelements 27 tritt die Ladeluft 5 in den ersten Sammelkasten 2 ein, wird dort um 90° nach unten abgelenkt und verlässt den Sammelkasten. 2 mittels eines nicht näher dargestellten, ersten Fluidanschlusses 29. Das Wärmetauscherelement 27 kann vom parallel zueinander verlaufenden, die beiden Sammelkästen 2, 3 kommunizierend verbindenden Ladeluftrohren gebildet sein (nicht näher dargestellt). Die Ladeluftrohre verlaufen rechtwinklig zu den Längserstreckungen der Sammelkästen 2 und 3. Zwischen den einzelnen, beabstandet zueinander liegenden Ladeluftrohren können - zur Oberflächenvergrößerung - Kühlluftrippen angeordnet sein, die entgegengesetzt zur Richtung der Ladeluft 5 von der Kühlluft 7 durchströmt werden, so dass ein intensiver Wärmeaustausch im Wärmetauscherelement 27 stattfindet, der dazu führt, dass die Ladeluft 5 von der Kühlluft 7 gekühlt wird. Hierzu wird die Kühlluft 7 mittels eines zweiten Fluidanschlusses 30, der sich an der Stirnseite 20 des Bereichs 18 befindet, in das Innere des Gehäuses 8 eingelassen, derart, dass sie die beiden Strömungswege 22 und 23 passiert und somit den zweiten Sammelkasten 3 zumindest teilweise umspült. Die Kühlluft 7 tritt dann in das Wärmetauscherelement 27 ein und durchströmt im Gegenstromprinzip dieses Bauelement, das heißt, die Strömungsrichtung der Ladeluft 5 verläuft entgegengesetzt zur Strömungsrichtung der Kühlluft 7. Die Kühlluft 7 verlässt das Wärmetauscherelement 27 im Bereich des zweiten Sammelkastens 3 und strömt in die Strömungswege 24 und 25 ein, das heißt, der Sammelkasten 3 wird beidseitig umströmt. Die Kühlluft 7 gelangt dann zur Stirnseite 21 des Bereichs 19, wo ein zweiter Fluidanschluss 31 zur Abführung der Kühlluft 7 ausgebildet ist.

Der Figur 1 ist zu entnehmen, dass die Kühlluft 7 keine wesentliche Umlenkung im Bereich des Wärmetauschers 1, insbesondere im Bereich des Wärmetauscherelements 27 erfährt. Das Umströmen der beiden Sammelkästen 2 und 3 erfolgt zwar mit einer gewissen Richtungsänderung der Kühlluft 7, die jedoch keinen nennenswerten Druckverlust mit sich bringt, da sich unter Umständen eine laminare Strömung einstellt. Die Fluidanschlüsse 30 und 31 weisen somit in Richtung der Strömungsrichtung von Ladeluft. 5 innerhalb des Wärmetauscherelements 27.

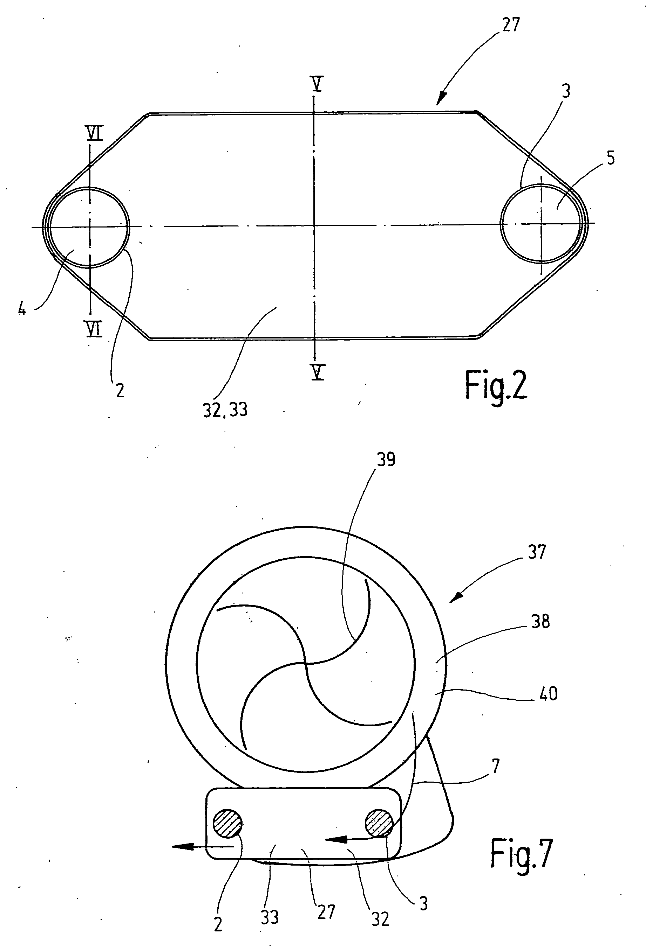

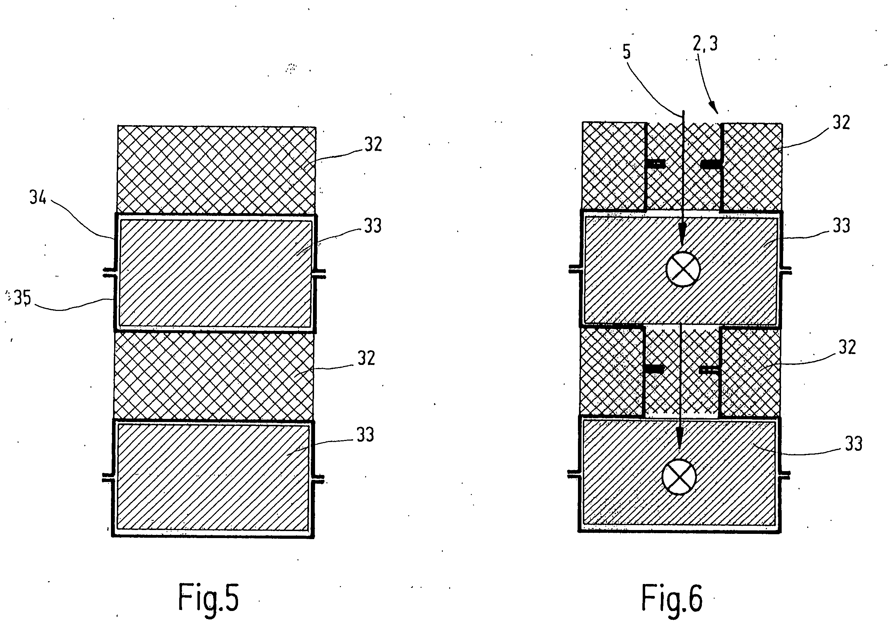

Die Figur 2 zeigt eine Draufsicht auf eine Scheibenkontur des Wärmetauscherelements 27, das heißt, das Wärmetauscherelement 27 ist in Stapelscheibenbauweise realisiert. Hierzu werden einzelne Scheiben (profilierte Aluminiumbleche) im Wechsel aufeinandergelegt, die - zur Ausbildung des Anschlusses und zur Ausbildung der beiden Sammelkästen 2 und 3 - mit Näpfen und Durchzügen versehen sind. Beim Aufeinanderstapeln wird Napf/Durchzüg auf Napf/Durchzug und dann das nächste Paar Rand auf Rand usw. gelegt und verlötet. Durch dieses Aufeinanderstapeln wird bei dem Wärmetauscherelement 27 gemäß Figur 5 abwechselnd eine Kühlluftrippe 32, eine Ladeluftrippe 33 und dann wieder eine Kühlluftrippe 32 und - darauffolgend- eine Ladeluftrippe 33 usw. ausgebildet. Aus der Figur 5 ist erkennbar, dass durch Aufeinanderlegen zweier Halbschalen 34, 35 der Strömungsweg für die Ladeluft 5 im Bereich des Wärmetauscherelements 27 erstellt wird. Die benachbarte Ladeluftrippe 33 weist einen Abstand zur erstgenannten Ladeluftrippe 33 auf, so dass dazwischen eine Kühlluftrippe 32 ausgebildet wird, die von der Kühlluft 7 im Gegenstrom durchströmt werden kann.

Um im Bereich der Sammelkästen 2 und 3 die Ladeluft 5 und die Kühlluft 7 ihren jeweiligen Strömungswegen innerhalb des Wärmetauscherelements 27 zuführen zu können, ist -gemäß der Scheibenbauweise der Figur 6- vorgesehen, dass die Ladeluftrippen 33 dort - zur Ausbildung des Sammelkastens 2 beziehungsweise 3 - miteinander verbunden sind, so dass die Ladeluft 5 die Kühlluftrippen 32 abgeschottet durchsetzt und in die Bereiche der Ladeluftrippen 33 einströmt und dann - quasi in die Blattebene der Figur 6 hinein - entsprechend aufgeteilt das Wärmetauscherelement 27 durchsetzt. Entsprechendes erfolgt im Bereich des anderen Sammelkastens; dort wird die Ladeluft wieder zusammengeführt und gemeinsam abgeführt. Die Kühlluftrippen 32 stehen mit den Strömungswegen 22 bis 25 in Verbindung, das heißt, sie werden von der Kühlluft 5 passiert.

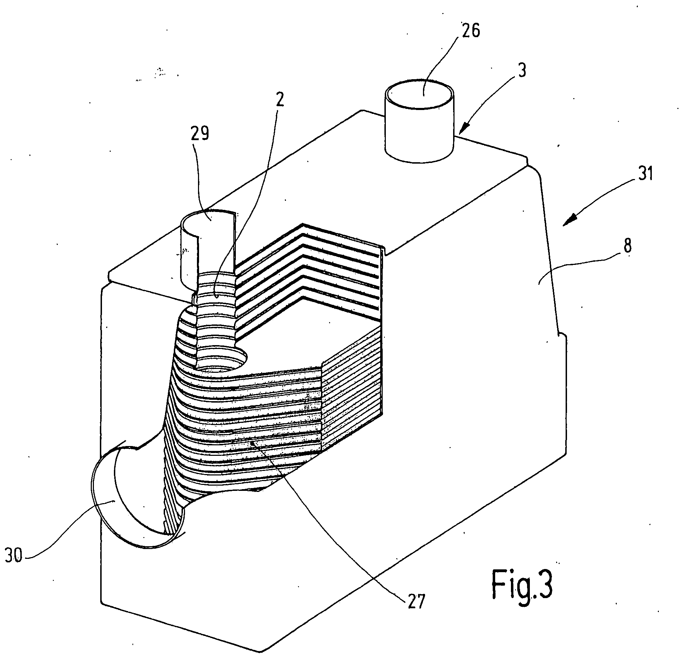

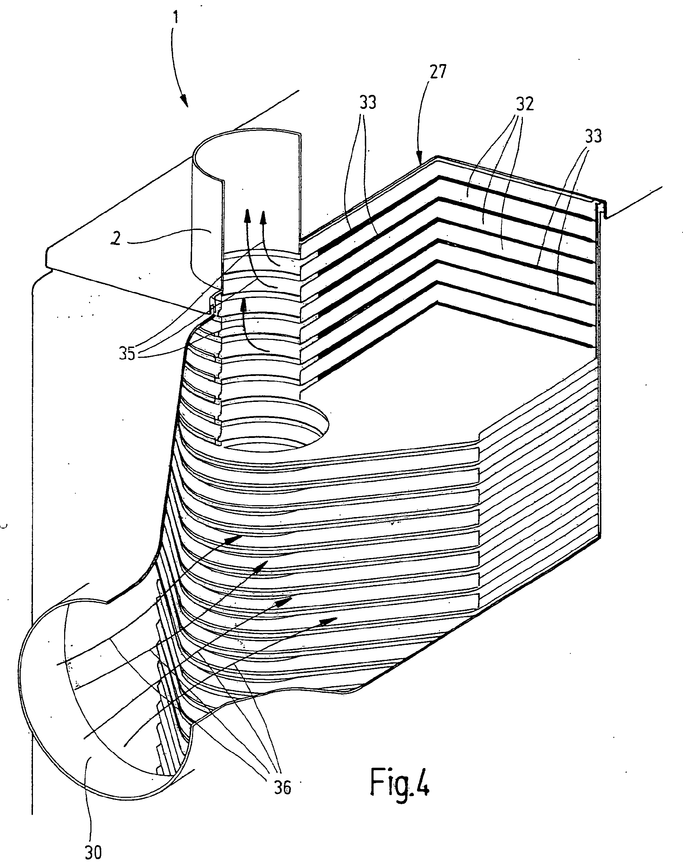

Aus den Figuren 3 und 4 geht der Gesamtaufbau eines vorstehend beschriebenen Wärmetauschers 1 in Stapelscheibenbauform näher hervor. Die Figur 3 zeigt das Gehäuse 8, das das Wärmetauscherelement 27 umgibt, wobei das Gehäuse 8 an einander diametral gegenüber liegenden Enden die zweiten Fluidanschlüsse 30 und 31 aufweist. Ferner sind die Fluidanschlüsse 26 und 29 erkennbar, die zu den Sammelkästen 2, 3 führen.

Der Figur 4 ist zu entnehmen, dass vom Wärmetauscherelement 27 kommende Ladeluft 5 von den Ladeluftrippen 33 herangeführt und - entsprechend der Pfeile 35 - von dem Sammelkasten 2 abgeführt wird. Die zwischen den Ladeluftrippen 33 liegenden Kühlluftrippen 32 hingegen führen - nach dem Gegenstromprinzip - Kühlluft 7 gemäß der Pfeile 36.

Auch beim Ausführungsbeispiel der Figuren 2 bis 4 ist sichergestellt, dass die Kühlluft 7 zum Eintritt in das Wärmetauscherelement 27 nicht oder nur unwesentlich umgelenkt werden muss, so dass nur geringe Druckverluste auftreten.

Die Figur 7 zeigt einen Lüfter 37 mit Lüftergehäuse 38 und Laufrad 39. In das Lüftergehäuse 38 ist ein Wärmetauscherelement 27 gemäß der vorstehend beschriebenen Ausführungsbeispiele integral zumindest teilweise derart aufgenommen, dass innerhalb des Lüftergehäuses 38 geführte Kühlluft 7 das Wärmetauscherelement 27 gemäß der aus Figur 7 hervorgehenden Pfeile durchströmen kann. Das Wärmetauscherelement 27 weist aufgrund der Stapelbauweise integrierte Sammelkästen 2 und 3 und dazwischenliegende Kühlluftrippen 32 sowie Ladeluftrippen 33 auf, so dass ein dort geführter Ladeluftstrom von der Kühlluft 7 gekühlt wird. Das Gehäuse 38 ist vorzugsweise als Spiralgehäuse 40 ausgebildet.

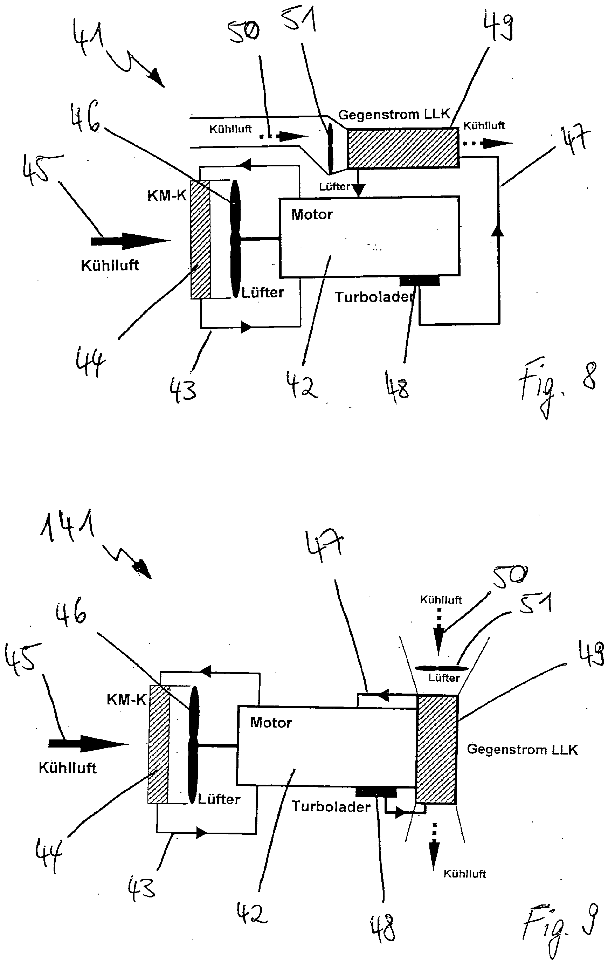

Fig. 8 und 9 zeigen schematisch ein Kühlsystem 41 beziehungsweise 141 für einen Verbrennungsmotor 42. Der Motor 42 wird mittels eines Kühlmittelkreislaufs 43 gekühlt, durch den ein flüssiges Kühlmittel gepumpt wird. In dem Kreislauf 43 ist ein Kühlmittelkühler 44 für einen Wärmetausch zwischen dem Kühlmittel und Kühlluft 45 angeordnet. Eine als Kühllüfter 46 ausgebildete Fluidfördereinrichtung 46 dient der Förderung von Kühlluft durch den Kühlmittelkühler 44. Anstelle der gezeigten Anordnung des Kühllüfters 46 - in Luftströmungsrichtung gesehen - nach dem Kühler 44 ist auch eine Anordnung des Lüfters 46 vor dem Kühler 44 möglich.

Ein Ladeluftkreislauf 47 dient der Zuführung von Verbrennungsluft zu dem Verbrennungsmotor 42, wobei die Verbrennungsluft vorher mittels eines Turboladers 48 komprimiert, das heißt aufgeladen, und in einem als Gegenstromwärmetauscher ausgebildeten Ladeluftkühler 49 abgekühlt wird. Der Ladeluftkühler ist dabei, wie in Fig. 8 gezeigt, getrennt von dem Verbrennungsmotor 42 oder, wie in Fig. 9 gezeigt, an dem Motor 42 anordbar. Kühlluft 50 wird dem Ladeluftkühler 49 mittels einer separaten, ebenfalls als Lüfter ausgebildeten Fluidfördereinrichtung 51 zugeführt. Der Lüfter 51 kann dabei - in Luftströmungsrichtung - vor oder nach dem Kühler 49 angeordnet sein. Ein Strömungskanal 52 dient einerseits einer Führung der Kühlluft 50 und andererseits einer Trennung der Kühlluft 50 von der Kühlluft 45, so daß eine Vermischung der beiden Kühlluftströme vermeidbar ist.

Bei einer solchen separaten Anordnung von Kühlmittel- und Ladeluftkühler mit voneinander getrennten Lüftern ist eine unabhängige Versorgung der beiden Wärmetauscher mit Kühlluft möglich. Da beide Wärmetauscher mit kalter - und nicht vorgewärmter - Kühlluft versorgbar sind, ist eine erhöhte Leistungsfähigkeit beziehungsweise bei gleicher Leistungsfähigkeit eine kleinere Bauweise der einzelnen Wärmetauscher erzielbar.

Ein als Gegenstromwärmetauscher ausgebildeter Ladeluftkühler erfordert unter Umständen eine gegenüber einem Kreuzstromladeluftkühler geringere Lüfterleistung, so daß ein weniger leistungsstarker und damit kleinerer und/oder kostengünstigerer Lüfter für die Ladeluftkühlung verwendbar ist. Beispielsweise ein elektrischer Lüfter und vorzugsweise ein Radiallüfter ist hierfür geeignet. Auch der Kühlmittelkühllüfter kann kleiner ausgelegt werden, da er nur den Druckabfall eines Wärmetauschers - im Gegensatz zu zwei Wärmetauschern beim Stand der Technik - überwinden muß.

Der Ladeluftkühler kann separat vom Kühlmittelkühler gekühlt werden, das heißt der Ladeluftkühllüfter wird nur bei Bedarf des Ladeluftkühlers und der Kühlmittelkühllüfter wird nur bei Bedarf des Kühlmittelkühlers betrieben. Somit sind die Wärmetauscher (auch) über die Kühlluftseite regelbar.

Außerdem wird der Kühlmittelkühler - im Gegensatz zum Stand der Technik - nicht mit vorgewärmter Kühlluft des Ladeluftkühlers, sondern mit kalter (Frisch-) Luft beaufschlagt und ist deshalb unter Umständen kleiner dimensionierbar.

Insgesamt wird der Nachteil eines erhöhten Aufwandes durch eine zusätzliche Fluidfördereinrichtung in Kauf genommen, da dieser Nachteil durch die genannten Vorteile mehr als nur ausgeglichen wird.

## Patentansprüche

1. Kühlsystem für einen Verbrennungsmotor, insbesondere für ein Kraftfahrzeug, mit einem ersten Kreislauf (43) für ein erstes Fluid, wobei der erste Kreislauf einen ersten Wärmetauscher (44) für einen Wärmetausch zwischen dem ersten und einem zweiten Fluid (45) aufweist, und mit einem zweiten Kreislauf (47) für ein drittes Fluid, wobei der zweite Kreislauf einen zweiten (49) Wärmetauscher für einen Wärmetausch zwischen dem dritten und einem vierten Fluid (50) aufweist, wobei eine erste Fluidfördereinrichtung (46) für eine Förderung des zweiten Fluids durch den ersten Wärmetauscher und eine zweite (51) Fluidfördereinrichtung für eine Förderung des vierten Fluids durch den zweiten Wärmetauscher vorgesehen sind, wobei der erste und/oder der zweite Wärmetauscher einen ersten Sammelkasten und einen zweiten Sammelkasten für das erste beziehungsweise dritte Fluid aufweist, wobei der erste und der zweite Sammelkasten jeweils einen ersten Fluidanschluss für das erste beziehungsweise dritte Fluid aufweisen und über zumindest ein Wärmetauscherelement miteinander kommunizierend verbunden sind, und dass der erste und/oder zweite Wärmetauscher ein das zumindest eine Wärmetauscherelement aufnehmendes, im Inneren das zweite beziehungsweise vierte Fluid führendes Wärmetauschergehäuse aufweist, wobei das Wärmetauschergehäuse zweite Fluidanschlüsse für das zweite beziehungsweise vierte Fluid aufweist, wobei das zweite und das vierte Fluid Kühlluft ist, das erste Fluid ein Kühlfluid zur Kühlung des Verbrennungsmotors ist und das dritte Fluid Verbrennungsluft für den Verbrennungsmotor ist und wobei ein Trennelement für eine Trennung des zweiten von dem vierten Fluid vorgesehen ist.

2. Kühlsystem nach Anspruch 1, **dadurch gekennzeichnet, dass** zumindest ein Fluidführungselement für das zweite und/oder für das vierte Fluid vorgesehen ist.

3. Kühlsystem nach einem der vorhergehenden Ansprüche, **dadurch gekennzeichnet, dass** der erste und/oder der zweite Wärmetauscher als Kreuzstromwärmetauscher ausgebildet ist.

4. Kühlsystem nach einem der vorhergehenden Ansprüche, **dadurch gekennzeichnet, dass** der erste und/oder der zweite Wärmetauscher als Gegenstromwärmetauscher ausgebildet ist.

5. Kühlsystem nach einem der vorhergehenden Ansprüche, **dadurch gekennzeichnet, dass** der erste und/oder der zweite Wärmetauscher als Gleichstromwärmetauscher ausgebildet ist.

6. Kühlsystem nach einem der vorhergehenden Ansprüche, **dadurch gekennzeichnet, dass** der erste und/oder der zweite Sammelkasten zumindest teilweise mit zumindest bereichsweise vorliegendem Abstand zu einer Gehäuseinnenwand des Wärmetauschergehäuses in das Wärmetauschergehäuse aufnehmbar ist.

7. Kühlsystem nach dem vorhergehenden Anspruch 6, **dadurch gekennzeichnet, dass** die Gehäuseinnenwand eng an einem Wärmetauscherelement anliegt.

8. Kühlsystem nach einem der vorhergehenden Ansprüche, **dadurch gekennzeichnet, dass** die erste und/oder die zweite Fluidfördereinrichtung als Lüfter ausgebildet ist.

9. Kühlsystem nach einem der vorhergehenden Ansprüche 1 bis 7, **dadurch gekennzeichnet, dass** die erste und/oder die zweite Fluidfördereinrichtung ein Fluidfördereinrichtungsgehäuse aufweist.

10. Kühlsystem nach einem der vorhergehenden Ansprüche 1 bis 7, **dadurch gekennzeichnet, dass** das Fluidfördereinrichtungsgehäuse als Spiralgehäuse ausgebildet ist.

11. Kühlsystem nach einem der vorhergehenden Ansprüche, **dadurch gekennzeichnet, dass** das erste und/oder das zweite Fluidfördereinrichtungsgehäuse mit dem ersten beziehungsweise zweiten Wärmetauschergehäuse einteilig, insbesondere einstückig ausgebildet ist.

12. Kühlsystem nach einem der vorhergehenden Ansprüche, **dadurch gekennzeichnet, dass** das erste Fluid und/oder das dritte Fluid flüssig ist.

13. Kühlsystem nach einem der vorhergehenden Ansprüche, **dadurch gekennzeichnet, dass** die Verbrennungsluft vor dem Durchströmen des zweiten Wärmetauschers mittels einer Luftfördereinrichtung aufladbar ist.

## Claims

1. A cooling system for an internal combustion engine, in particular for a motor vehicle, with a first circuit (43) for a first fluid, wherein the first circuit has a first heat exchanger (44) for a heat exchange between the first and a second fluid (45), and with a second circuit (47) for a third fluid, wherein the second circuit has a second (49) heat exchanger for a heat exchange between the third and a fourth fluid (50), wherein a first fluid conveying device (46) for conveying the second fluid through the first heat exchanger and a second (51) fluid conveying device for conveying the fourth fluid through the second heat exchanger are provided, wherein the first and/or the second heat exchanger have a first collecting box and a second collecting box for the first and third fluid, respectively, wherein the first and the second collecting box each have a first fluid connection for the first and third fluid, respectively, and are communicatively connected to one another via at least one heat exchanger element, and that the first and/or second heat exchanger have at least one heat exchanger housing which accommodates the at least one heat exchanger element and carries the second and fourth fluid, respectively, inside, wherein the heat exchanger housing has second fluid connections for the second and fourth fluid, respectively, wherein the second and the fourth fluid are cooling air, the first fluid is a cooling fluid for cooling the internal combustion engine and the third fluid is combustion air for the internal combustion engine and wherein a separating element is provided in order to separate the second and the fourth fluid.

2. The cooling system according to claim 1, **characterised in that** at least one fluid guiding element is provided for the second and/or for the fourth fluid.

3. The cooling system according to one of the preceding claims, **characterised in that** the first and/or the second heat exchanger are formed as cross-flow heat exchangers.

4. The cooling system according to one of the preceding claims, **characterised in that** the first and/or the second heat exchanger are formed as counter-flow heat exchangers.

5. The cooling system according to one of the preceding claims, **characterised in that** the first and/or the second heat exchanger are formed as co-flow heat exchangers.

6. The cooling system according to one of the preceding claims, **characterised in that** the first and/or the second collecting box can be accepted at least in parts and with a distance to a housing interior wall of the heat exchanger housing, present at least in sections, in the heat exchanger housing.

7. The cooling system according to the preceding claim 6, **characterised in that** the housing interior wall closely abuts a heat exchanger element.

8. The cooling system according to one of the preceding claims, **characterised in that** the first and/or the second fluid conveying device are formed as fans.

9. The cooling system according to one of the preceding claims 1 to 7, **characterised in that** the first and/or the second fluid conveying device have a fluid conveying device housing.

10. The cooling system according to one of the preceding claims 1 to 7, **characterised in that** the fluid conveying device housing is formed as a spiral housing.

11. The cooling system according to one of the preceding claims, **characterised in that** the first and/or the second fluid conveying device housing and the first and the second heat exchanger housing, respectively, are in one piece, in particular integrally formed.

12. The cooling system according to one of the preceding claims, **characterised in that** the first fluid and/or the third fluid are liquid.

13. The cooling system according to one of the preceding claims, **characterised in that** the combustion air can be charged before flowing through the second heat exchanger by means of an air conveying device.

## Revendications

1. Système de refroidissement pour un moteur à combustion interne, en particulier pour un véhicule automobile, comprenant un premier circuit (43) pour un premier fluide, où le premier circuit présente un premier échangeur de chaleur (44) pour un échange de chaleur entre le premier fluide et un deuxième fluide (45), et comprenant un deuxième circuit (47) pour un troisième fluide, où le deuxième circuit présente un deuxième échangeur de chaleur (49) pour un échange de chaleur entre le troisième fluide et un quatrième fluide (50), où il est prévu un premier dispositif de transport de fluide (46) pour un transport du deuxième fluide à travers le premier échangeur de chaleur, et un deuxième dispositif de transport de fluide (51) pour un transport du quatrième fluide à travers le deuxième échangeur de chaleur, où le premier et / ou le deuxième échangeur de chaleur présente un premier bac collecteur et un deuxième bac collecteur pour le premier fluide ou le troisième fluide, où le premier bac collecteur et le deuxième bac collecteur présentent respectivement un premier raccordement de fluide pour le premier fluide ou le troisième fluide, lesdits bacs collecteurs étant reliés en communiquant l'un avec l'autre par au moins un élément d'échangeur de chaleur, et **caractérisé en ce que** le premier et / ou le deuxième échangeur de chaleur présente un carter d'échangeur de chaleur logeant l'élément d'échangeur de chaleur au moins au nombre de un et guidant, à l'intérieur de celui-ci, le deuxième fluide ou le quatrième fluide, où le carter d'échangeur de chaleur présente des deuxièmes raccordements de fluide pour le deuxième fluide ou le quatrième fluide, où le deuxième fluide et le quatrième fluide sont de l'air de refroidissement, le premier fluide étant un fluide de refroidissement servant au refroidissement du moteur à combustion interne, et le troisième fluide est de l'air de combustion pour le moteur à combustion interne, et où il est prévu un élément de séparation pour une séparation du deuxième fluide, par rapport au quatrième fluide.

2. Système de refroidissement selon la revendication 1, **caractérisé en ce qu'**il est prévu au moins un élément de guidage de fluide pour le deuxième fluide et / ou pour le quatrième fluide.

3. Système de refroidissement selon l'une des revendications précédentes, **caractérisé en ce que** le premier et / ou le deuxième échangeur de chaleur est configuré comme un échangeur de chaleur à flux croisés.

4. Système de refroidissement selon l'une quelconque des revendications précédentes, **caractérisé en ce que** le premier et / ou le deuxième échangeur de chaleur est configuré comme un échangeur de chaleur à flux circulant dans des directions opposées.

5. Système de refroidissement selon l'une quelconque des revendications précédentes, **caractérisé en ce que** le premier et / ou le deuxième échangeur de chaleur est configuré comme un échangeur de chaleur à flux circulant dans le même sens.

6. Système de refroidissement selon l'une quelconque des revendications précédentes, **caractérisé en ce que** le premier et / ou le deuxième bac collecteur peut être logé au moins partiellement dans le carter de l'échangeur de chaleur, en ayant une distance qui le sépare au moins partiellement par rapport à une paroi intérieure du carter de l'échangeur de chaleur.

7. Système de refroidissement selon la revendication 6, **caractérisé en ce que** la paroi intérieure du carter est étroitement en appui sur un élément de l'échangeur de chaleur.

8. Système de refroidissement selon l'une quelconque des revendications précédentes, **caractérisé en ce que** le premier et / ou le deuxième dispositif de transport de fluide est conçu comme un ventilateur.

9. Système de refroidissement selon l'une quelconque des revendications 1 à 7, **caractérisé en ce que** le premier et / ou le deuxième dispositif de transport de fluide présente un carter de dispositif de transport de fluide.

10. Système de refroidissement selon l'une quelconque des revendications 1 à 7, **caractérisé en ce que** le carter du dispositif de transport de fluide est conçu comme un carter en spirale.

11. Système de refroidissement selon l'une quelconque des revendications précédentes, **caractérisé en ce que** le premier et / ou le deuxième carter du dispositif de transport de fluide est conçu comme étant d'un seul tenant, en particulier en formant une seule et même pièce avec le premier ou le deuxième carter de l'échangeur de chaleur.

12. Système de refroidissement selon l'une quelconque des revendications précédentes, **caractérisé en ce que** le premier fluide et / ou le troisième fluide est liquide.

13. Système de refroidissement selon l'une quelconque des revendications précédentes, **caractérisé en ce que** l'air de combustion, avant de traverser le deuxième échangeur de chaleur, peut être suralimenté au moyen d'un dispositif de transport d'air.
